Europäisches Patentamt

European Patent Office

Office européen des brevets

(11) Publication number: **0 130 772 B1**

## EUROPEAN PATENT SPECIFICATION

(45) Date of publication of patent specification: **08.01.92**  (51) Int. Cl.⁵: **A21C 11/10, A21C 9/06**

(21) Application number: **84304296.1**

(22) Date of filing: **25.06.84**

(54) Method and apparatus for forming edible products having an inner portion enveloped by a dissimilar outer portion.

(30) Priority: **24.06.83 US 507401**
**11.10.83 US 540981**

(43) Date of publication of application:
**09.01.85 Bulletin 85/02**

(45) Publication of the grant of the patent:
**08.01.92 Bulletin 92/02**

(84) Designated Contracting States:
**AT BE CH DE FR GB IT LI LU NL SE**

(56) References cited:
**CH-A- 364 231**       **DE-C- 47 398**
**US-A- 1 879 555**    **US-A- 2 811 117**
**US-A- 3 354 842**    **US-A- 3 869 975**
**US-A- 4 075 359**

(73) Proprietor: **NABISCO BRANDS, Inc.**
**Nabisco Brands Plaza**
**Parsippany New Jersey 07054(US)**

(72) Inventor: **Pinto, Albert Anthony**
**6 Willow Lane**
**White Plains New York 10605(US)**

(74) Representative: **Thomas, Roger Tamlyn et al**
**D. Young & Co. 10 Staple Inn**
**London WC1V 7RD(GB)**

## Description

BACKGROUND OF THE INVENTION

The present invention relates to the manufacture of edible products having dissimilar inner and outer portions, and, more particularly to the manufacture of such products in which the inner portion is enveloped by the outer portion.

The types of products to which the present invention relates includes baked goods that are baked from dough pieces having an outer layer of farinaceous dough and a core which may be a dissimilar dough or another material such as a jam, cream, puree, paste, or other extrudable form of fruit, cheese, meat, vegetable, confection or other edible substance. In those products where the core is also a dough, the inner and outer doughs would be dissimilar in composition so as to produce different tastes, colors, appearances, textures, consistencies, or the like in the inner and outer portions of the baked product.

In the past, products of this type have been formed from laminated sheets in which two dough layers are separated by a layer of filling material. This approach is used in the method disclosed in U.S. Patent US-A-3,494,302 wherein the laminated sheet is divided transversely and longitudinally into rectangular dough pieces. The product produced by the method and apparatus of that patent is danish pastry. If such an approach were used to produce products using doughs which spread during the baking process, like soft cookie doughs, the individual rectangular pieces would have to be separated in both the longitudinal and transverse directions to prevent the dough pieces from fusing together during baking. It would, of course, require extra labor or machinery to affect such separations.

The laminated sheet approach is not suitable for producing products having the round configuration associated with most conventional cookies. To achieve a round baked product, the dough piece must be round or substantially round, depending on the extent to which the dough spreads during baking. To cut round dough pieces from a dough sheet produces a high proportion of scrap. In the production of round unfilled cookies and crackers, the scrap is mixed back into the dough so there is no waste. However, this cannot be done when the dough sheet is a laminate of different materials. The scrap from such a laminate contains some of each material, and to mix it into either of the materials in quantity would change the character of that material and blur the distinction between the outer and inner portions of the baked product.

Another approach to forming products having different inner and outer portions, is disclosed in U.S.Patent US-A-3,572,259. In this approach, the two materials are concentrically extruded and the extrudate rope is divided and formed into concentric dough balls by a pair of rotating wheels having spirally configured peripheries. The apparatus shown, while effective for use in small bakeries, has a limited production capacity and requires a relatively large floor area for its capacity.

The typical band oven used in large commercial bakeries carries up to 18 rows of two inch diameter cookies. The machine of the patent under discussion is capable of producing only a single row of dough pieces. Therefore, 18 of these machines would be required to fill a modern high production oven. Also, it would be necessary to provide a system of conveyors to carry the dough pieces from the machines and deposit them in a regular pattern on the band of the oven.

It should also be noted that Swiss Patent CH-A-364231 describes a method and apparatus for forming dough pieces, such as ravioli, having dissimilar inner and outer portions wherein the inner portion is enveloped by the outer portion, comprising continuously coextruding two dissimilar materials to form an extrudate rope in which the dissimilar materials are arranged to provide an inner core surrounded by an outer tube, said outer tube consisting of a dough; depositing the extrudate rope upon a continuously moving horizontal conveyor; and dividing the extrudate rope on the conveyor into individual dough pieces by displacing the inner core material away from spaced zones extending transversely of the extrudate rope, sealing the outer tube to itself along said zones, and severing the outer tube along a line within said zone, using a rotating drum with a plurality of ribs thereon which successively engage the rope.

SUMMARY OF THE INVENTION

According to one aspect, the invention provides a method of forming dough pieces having dissimilar inner and outer portions wherein the inner portion is enveloped by the outer portion, comprising the steps of: continuously coextruding two dissimilar materials to form an extrudate rope in which the dissimilar materials are arranged to provide an inner core surrounded by an outer tube, said outer tube consisting of a dough; depositing the extrudate rope upon a continuously moving horizontal conveyor; pressing downwardly against the extrudate rope to press it against the conveyor along a zone which extends transversely of the extrudate rope, and during said pressing, pushing adjacent portions of the extrudate rope away from the zone so as to displace the inner core material away from the zone, and severing the extrudate rope along a line within a part of said zone in which the outer tube becomes sealed to itself, so as to form an individual dough piece having an inner core thereof enveloped by the outer tube; characterised by simultaneously pressing and severing said extrudate rope at a plurality of said zones spaced therealong; continuing said pressing until upper portions of the outer tube have been forced through lower portions thereof to seal the outer tube to itself along said zones and until the extrudate rope has been severed.

The invention also extends to a method including a baking step to provide a baked product.

According to another aspect, the invention provides apparatus for forming a dough piece having dissimilar inner and outer portions wherein the inner portion is enveloped by the outer portion, said apparatus comprising in combination means for continuously extruding two dissimilar materials to form an extrudate rope of substantially circular cross-section, in which the dissimilar materials are arranged to provide an inner core surrounded by an outer tube, said outer tube consisting of a dough, conveyor means for transporting the extrudate rope in a horizontal orientation, and means for forming said dough pieces from said extrudate rope including a blade member, and means for moving said blade member downwardly against the extrudate rope, said blade member having a blunt edge for deforming said extrudate rope to displace said inner core material from the zone under said descending blade member, for sealing the outer tube to itself, and for separating the dough piece from the extrudate rope along the sealed portion of the outer tube, and said blade member including two blades curved in opposite directions in plan view, one of said blades operating to form a rounded end on the leading edge of the dough pieces and the other of said blades operating to form a rounded end on the trailing edge of the dough pieces, wherein the distance along the extrudate rope separating the points of operation of said two blades with respect to a single dough piece is greater than the diameter of the extrudate rope by an amount substantially equal to the increase in width thereof caused by the deforming action of said blades whereby the dough pieces formed are substantially round in plan view.

As hereinafter described in detail, the invention provides improved baked products wherein a centre portion of one material is uniformly covered by an outer layer of a different material.

## BRIEF DESCRIPTION OF THE DRAWINGS

Preferred embodiments of the invention have been chosen for purposes of illustration and description and are shown in the accompanying drawings, forming a part of the specification, wherein:

Fig. 1 is a side elevational view, partly in section, schematically illustrating apparatus in accordance with the present invention.

Fig 2 is a plan view taken along line 2 - 2 on Fig. 1 with the rubber web removed to show the extrudate rope in various stages of division.

Fig 3 is a plan view of the conveyor transfer mechanism shown in Fig. 1.

Fig. 4 is a sectional view taken along line 4 - 4 on Fig. 2 showing the cross section of the extrudate rope.

Fig. 5 is a sectional view taken along line 5 - 5 on Fig. 1 showing a cross section of the knife blades.

Fig. 6 is a longitudial sectional view of the extrudate rope and knives showing the effect of the knives on the· extrudate rope during the dividing operation.

Fig. 7 is a sectional view taken along line 7 - 7 on Fig. 6 further illustrating the effect of the knives during the dividing operation.

Fig. 8 is a longitudinal sectional view similar to Fig. 6 showing the completion of the dividing operation.

Fig. 9 is a sectional view taken along line 9 - 9 on Fig. 8 further illustrating the final effect of the knives on the extrudate rope.

Fig. 10 is a plan view similar to Fig. 2, illustrating a modified cutter construction.

Fig. 11 is an elevational view taken along line 11-11 on Fig. 10.

Fig. 12 is an elevational view taken along line 12-12 on Fig. 10.

Figs. 13 and 14 are sectional views of the modified cutter taken respectively along lines 13-13 and 14-14 on Fig. 10.

Fig. 15 is a plan view of a baked cookie made in accordance with the present invention.

Fig. 16 is a sectional view taken along lines 16-16 on Fig. 15.

Fig. 17 is a sectional view taken along line 17-17 on Fig. 15.

Fig. 18 is an elevational view of the conveyor transfer arrangement used with the modified cutter of Figs, 10 - 14.

Fig. 19 is a top plan view similar to Figs. 2 and 10, of another modified cutter construction.

Fig. 20 is a bottom view of the cutter construction shown in Fig. 19.

Fig. 21 is a sectional view taken along line 21-21 on Fig. 20.

Fig. 22 is a sectional view taken along line 22-22 on Fig. 21.

Fig. 23 is an enlargement of a portion of Fig. 21.

Fig. 24 is a top plan view of another modified cutter construction.

Fig. 25 is a bottom view of the cutter construction show in Fig. 24.

Fig. 26 is a sectional view taken along the line 26-26 on Fig. 25.

## DESCRIPTION OF THE PREFERRED EMBODIMENT

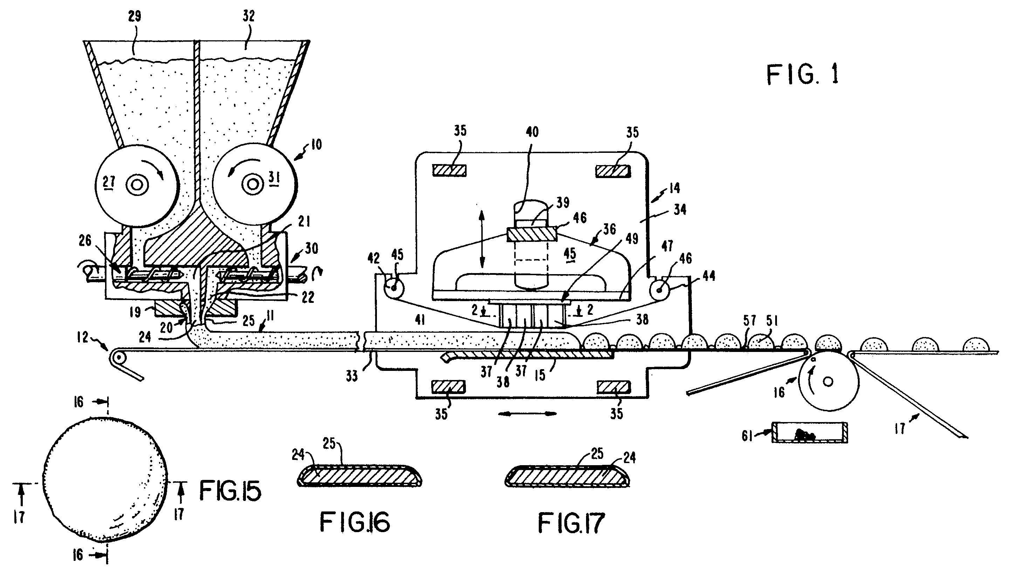

Referring to the drawings, and particularly to Fig. 1 thereof, there is shown apparatus according to the present invention which generally includes an extruder 10 producing an extrudate rope 11 of two dissimilar materials arranged concentrically, a conveyor 12 carrying the extrudate rope 11 away from the extruder 10, a reciprocating cutter mechanism 14 positioned above the conveyor, a backing plate 15 positioned beneath the conveyor at the cutting location, a transfer wheel mechanism 16 at the end of the conveyor 12, and a second conveyor 17 extending from the transfer mechanism 16 toward a baking oven (not shown) and moving faster than the conveyor 12.

The conveyor 12 may be of any width, and normally is equal in width to that of the band of the oven which it feeds. A typical oven band width is 42 inches (1.07m). In apparatus according to the present invention, a conveyor of that width could accommodate 18 parallel extrudate ropes spaced across the width thereof.

The extruder 10 extends across the entire width of the conveyor and includes a die block 19 which provides a plurality of coextrusion dies 20 (for example, 18 in number)of conventional design which are spaced across the conveyor. Each of the dies 20 have an inner port 21 and an outer port 22. A filler material is fed to the inner port 21 of each die and is extruded as the core portion 24 of the extrudate ropes 11. A dough is fed to the outer port 22 of each die and is extruded as the outer tube portion 25 of the ropes 11.

The inner ports 21 of the dies 20 are fed by individual screw extruder 26. All of the extruders 26 are fed by a single serrated feed roll 27 from a hopper 29. The outer ports 22 of the dies are fed by individual screw extruders 30. All of the extruders 30 are fed by a single serrated feed roll 31 from a hopper 32. The feed rolls 27, 31 and the hoppers 29, 32 extend across the width of the conveyor 12.

The screws of the extruders 26 are each driven to provide the same rate of flow of inner material to their respective dies. In like manner the screws of the extruders 30 are each driven to provide the same rate of flow of outer material to each of the dies. Typically, the set of extruders 26 and the set of extruders 30 would each be driven by separate motors, each motor driving its respective set of extruders through a gear train. The drive motors would typically be provided with speed controls to vary the rate of flow of the inner and outer materials independently.

The conveyor 12 includes a cotton fabric conveyor belt 33 which extends from the extruders and passes beneath the cutter 14.

The cutter 14 includes a pair of vertical plate members 34 interconnected by transverse bars 35. The cutter 14 is mounted on pivoted legs (not shown) and is reciprocated horizontally parallel to the conveyor belt 33. A die head 36 carrying cutter blades 37 and 38 is mounted between the plates 34 for vertical reciprocating movement. The die head 36 is provided with a slide block 39 that is slideably positioned in a vertical slot 40 formed in each of the plate members 34.

The reciprocating motions of the cutter 14 are such that the die head 36 is moving horizontally at the velocity of the conveyor belt 33 during the time the die is in engagement with the extrudate ropes 11.

A thin rubber web 41 is positioned between the cutter blades 37, 38 and the extrudate ropes 11. The web extends from a supply roll 42 to a take-up roll 44. The rolls 42 and 44 are respectively wound around rods 45 and 46 that extend between the plates 34. In the preferred embodiment, the web 41 is a latex rubber sheeting of between 6 and 9 thousandths of an inch (0.1524 to 0.2286mm) in thickness.

As the die head 36 moves downwardly, it carries the rubber web toward the dough sheet. When the cutter blades 37, 38 are pressed into the extrudate ropes 11, the web stretches and conforms to the contours of the blades. Upon upward movement of the die head, the web contracts to its original flat configuration and ensures positive separation of the cut dough pieces from the cutter blades. When the blades begin to cut through the rubber web, the rods 45 and 46 are manually rotated to bring a fresh section of web under the die.

The die head 36 is mounted between the slide blocks 39 by means of a plurality of arc formations 45 joined to a bar 46 which is carried by the blocks 39. A bolster plate 47 is bolted to each arc formation 45 and a cutter die 49 carrying the blades 37, 38 is bolted to the bottom of the bolster 47.

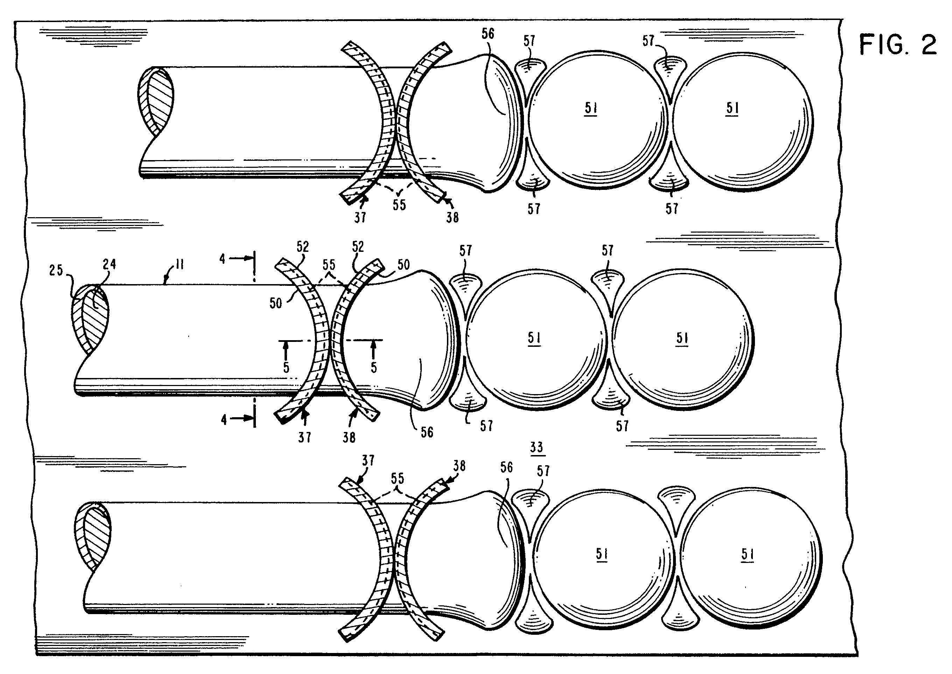

Referring now to Figs 2, 4 and 5, a pair of blades 37, 38 are positioned over each extrudate rope 11. The blades 37, 38 extend transversely with respect to the ropes 11. They are joined back to back at the centerline of the rope and curve away from each other. The blades 37 are curved to provide a concave surface 50 facing in the upstream direction toward the extruders. The blades 38 are curved so that their concave surface 50 faces downstream toward the oven. Both blades 37, 38 extend well past the edge of the rope 11 on both sides thereof. As shown in Fig. 2, the sets of blades are staggered so that the dough pieces 51, formed by the operation of the cutter blades, are positioned in staggered rows. During the baking process, the dough pieces spread outwardly in all directions and, therefore, they must be separated by a sufficient distance to prevent them from spreading into each other. The dough pieces in each row are separated along the line of the row as they are transferred to the conveyor 17 which runs at a faster rate. The staggering of the dough pieces in adjacent rows provides the necessary lateral separation while allowing closer row spacing than would otherwise be possible.

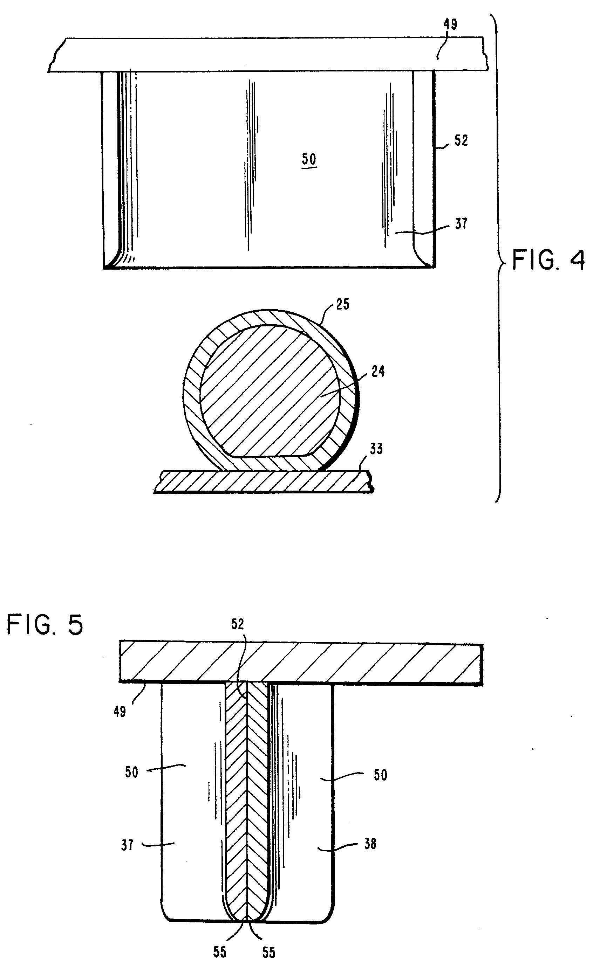

In cross section, as seen in Fig. 5, the convex surfaces 52 of the blades extend vertically from top to bottom. The concave surfaces 50 are formed with a tip section 54 that curves inwardly to a narrow flat surface or land 55 on the edge of the blade.

In a preferred embodiment, the blades are 1/8 inch (3.175mm) thick, have a land 55 which is 1/64 inch (0.397mm) wide, and the surfaces 50, 52 are curved in concentric circular arcs, the radius of the arc of the surface 52 being 7/8 inch (22.23mm). In this embodiment the central orifice of the die 20 is round having a diameter of 11/16 inch (17.46mm) and the outer orifice is 1 inch (25.4mm) in diameter and spaced 1/4 inch (6.35mm) below the inner orifice. The extrudate rope has a diameter of about 15/16 inch (23.8mm) as a result of a slight stretching action, and the spacing of the cut lines along the center line of the ropes 11 is 1-3/8 inches (34.9mm). The dough pieces formed under these conditions are substantially circular, measuring approximately 1-1/8 inches (28.57mm) long and 1-1/4 inch (31.75mm) wide, and being about 3/4 inch (19.05mm) in height. These dough pieces bake out to be approximately two inches (50.8mm) in diameter and about 3/8 inch (9.53mm) thick at the center. The round central orifice of the die 20 enables the use of an inner core material containing large discrete particles, such as chocolate chips, to be extruded.

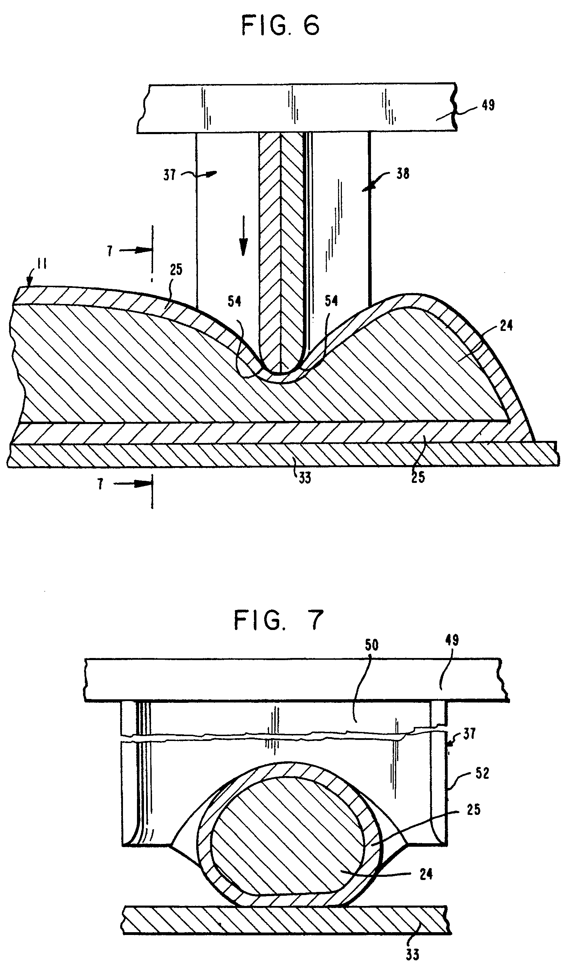

In Figs. 6 to 9, a set of blades 37, 38 are shown moving downwardly against and through the extrudate rope 11 to form a dough piece and seal the cut end of the rope. As the blades descend pinching the extrudate rope (Fig. 6), the rope flows outwardly along the concave surfaces of the blades (Fig. 7). The blunt edges of the blades 37, 38 press the upper part of the outer tube downwardly displacing the core portion 24. The upper portion of the outer tube 25 is thus pressed into the lower portion of the tube, sealing the tube 25 to itself along two curved zones on the belt 33 defined by the blades 37, 38. The tube 25 is severed within the sealed area by the lands 55 to separate the newly formed dough piece 51 from the sealed end 56 of the extrudate rope 11.

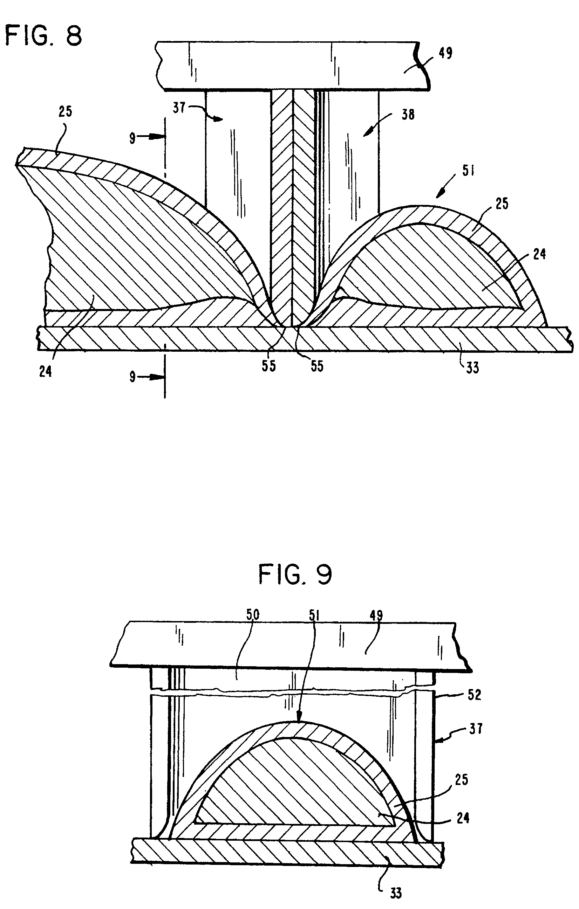

As can be seen in Figs 2 and 9, the sealed end 56 of the extrudate rope is flattened and extends transversely to provide a bulge in plan view at the rope end. In Fig. 2, the cutting blades are poised above the ropes before they descend. To the right of the blades, lies the sealed ends 56 of the ropes, the formed dough pieces 51, and triangular waste pieces 57 which represent the edge portions of the ropes 11 that are caught between the surfaces 52 of the blades 37, 38 as the blades descend.

The waste pieces 57 must be removed before the dough pieces enter the oven, otherwise the dough pieces and the waste pieces would spread into each other during the bake, resulting in oddly shaped products.

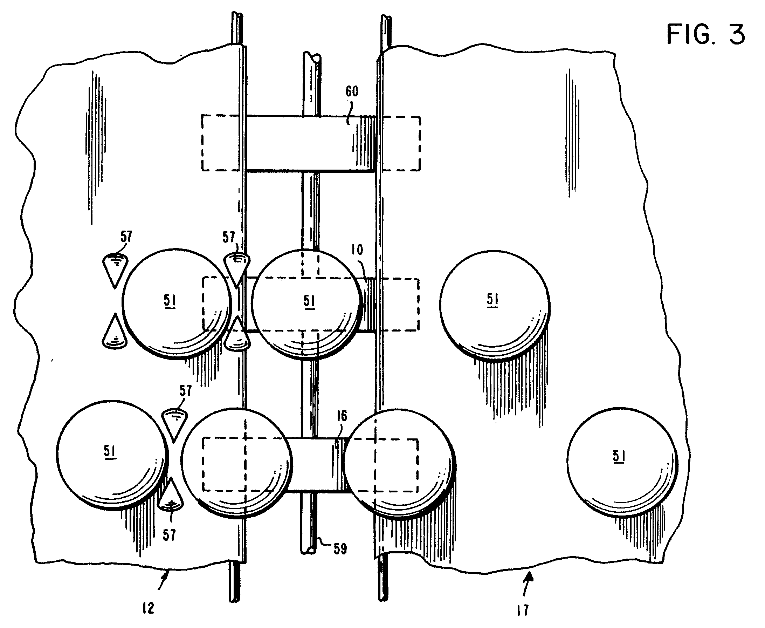

The transfer mechanism 16, as shown in Figs. 1 and 3 includes a driven shaft 59 and a series of flat edged wheels 60 mounted for rotation with the shaft. One of the wheels 60 is aligned with each row of dough pieces. The wheels 60 are wide enough to support the dough pieces 51 but not wide enough to convey the waste pieces 57. The dough pieces therefore move smoothly from the conveyor 12 to the wheels 60 and to the conveyor 17, while the waste pieces fall into a waste receptacle 61. The conveyor 17, being driven at a greater speed than the conveyor 12, moves a greater distance between receipt of successive dough piece, thereby increasing the spacing between the dough pieces.

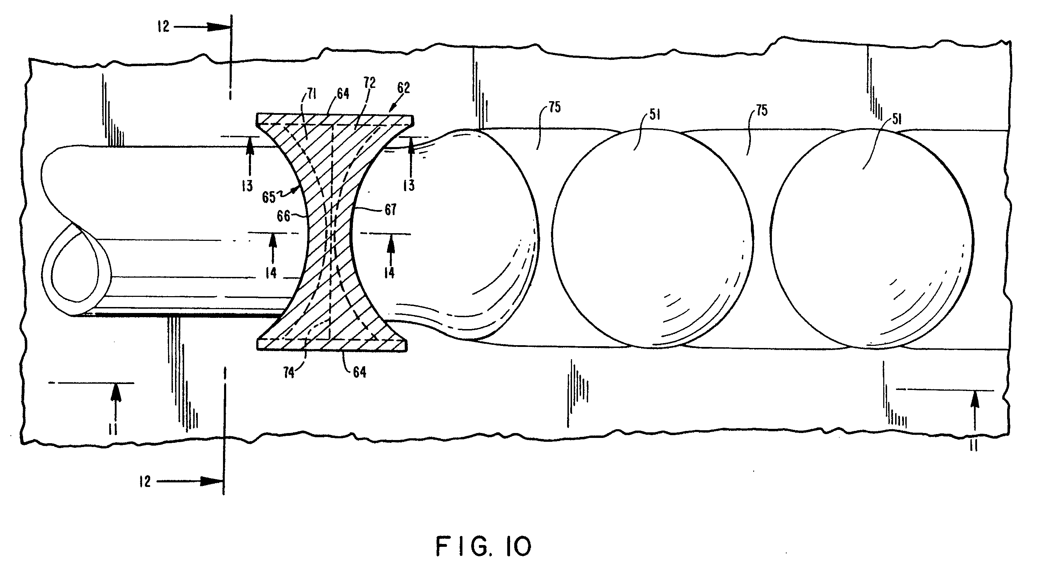

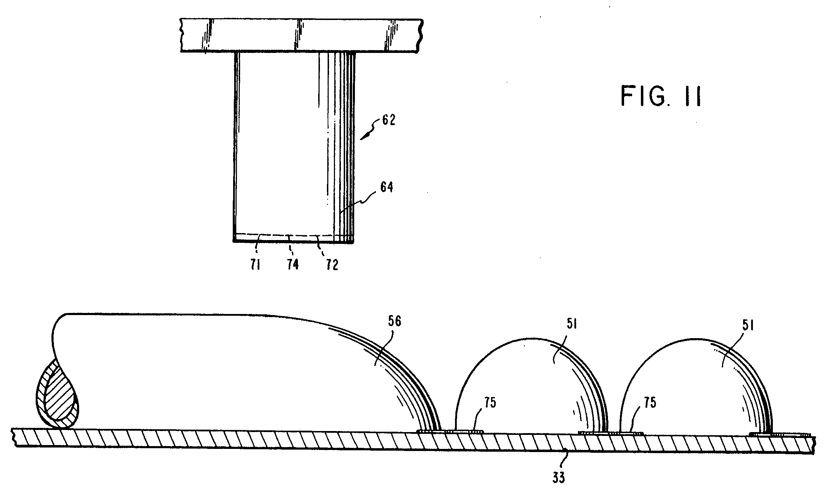

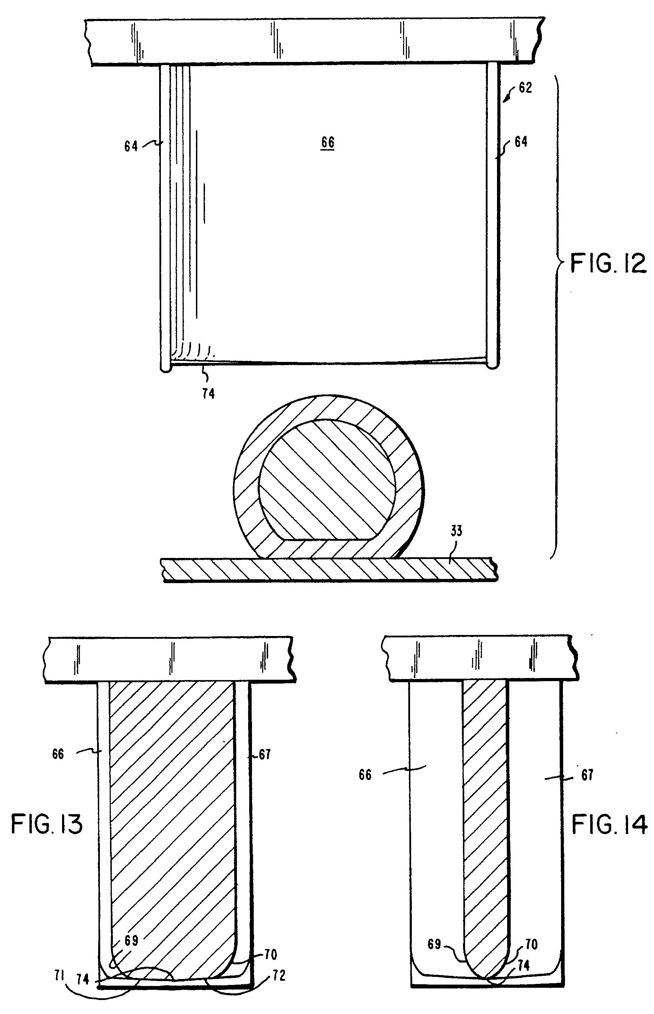

Referring now to Figs 10-15, there is shown a modification of the invention which reduces the production of waste to an insignificant level. In this embodiment, a cutter block unit 62 is substituted for each set of cutter blades 37, 38. As shown in Figs. 10-14, the cutter block unit 62 includes edge blades 64 positioned parallel to the rope 11 on each side thereof, and a central blade member 65 extending across the rope 11 between the blades 64. The blade member 65 is formed with concave surfaces 66 and 67 facing upstream and downstream respectively.

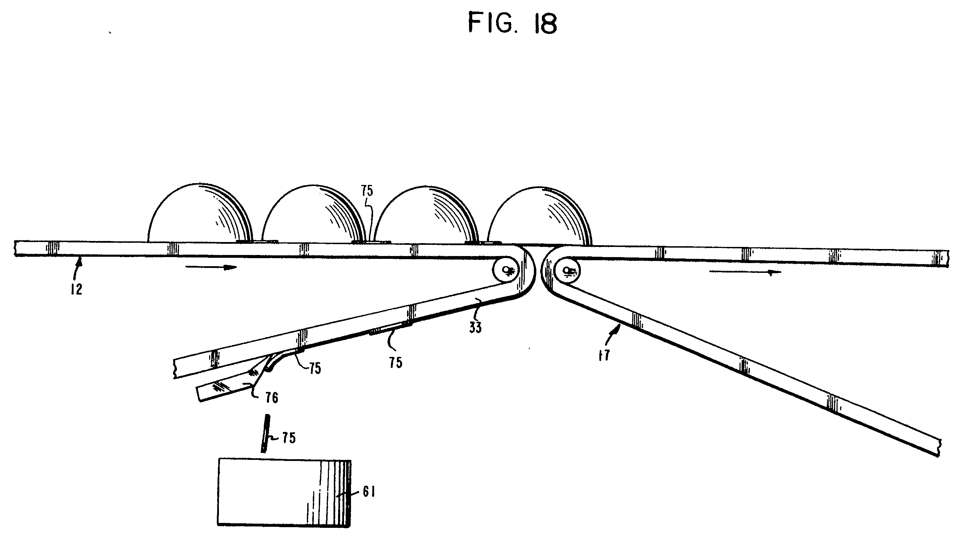

The surfaces 66, 67 are formed with inwardly tapered edges 69, 70 respectively. The bottom or land portion of the member 65 is composed of two flat surfaces 71, 72 which meet along a ridge line 74. As viewed in Figs. 13 and 14, the surfaces 71, 72 slant upwardly from the ridge line 74 at a very shallow angle.

When the cutter block unit 62 moves downwardly into the extrudate rope 11, the tapered edges 69, 70 and the bottom surfaces 71, 72 first squeeze the core material out of that portion of the rope 11 which is beneath the central blade 65, and then begin to squeeze the outer dough out of that area. Near the end of the downward stroke of the cutter unit 62, the edge blades 64 engage the surface of the cotton belt 33 and act as dams to prevent the dough still beneath the blade 65 from being spread transversely across the belt 33. At the end of the stroke, the blades 64 sink into the cotton belt 33 permitting the surfaces 71, 72 to impact against the surface of the belt. As a result, only a very thin smear of dough 75 is not displaced into the dough pieces 51. These dough dough smears 75, as a result of the forces involved, are pressed into the weave of the belt 33 adhere tightly thereto.

As shown in Fig. 18, the dough pieces 51 produced by this embodiment are transferred directly from the conveyor 12 to the conveyor 17. The waste pieces 75 remain on the conveyor belt to be removed by a scraper 76, and fall into the waste receptacle 61.

In a preferred embodiment of this modification, the edge blades 64 are 1/16 inch (1.588mm) thick and extend 1/32 inch (0.794mm) below the ridge line 74. The ridge line 74 is 1/64 inch (0.397mm) lower than the highest points on the surfaces 71 and 72, that is, where these surfaces intersect with the surface 69 and 70 at the edge of the blades 64. At the center of the blade 65, the surfaces 71 and 72 each have a width of 1/64 inch (0.397mm). The curvatures and dimensions of the surfaces 66, 67 and 69, 70 are the same as the corresponding surfaces on the cutter blades 37, 38, and the dough pieces 51 produced by each of the embodiments are identical. The waste dough smears 75 are only 0.010 inch (0.254mm) thick and therefore do not represent a significant loss. However, these smears consist almost entirely of the outer dough material and therefore they could be recycled into the outer dough hopper to eliminate all waste.

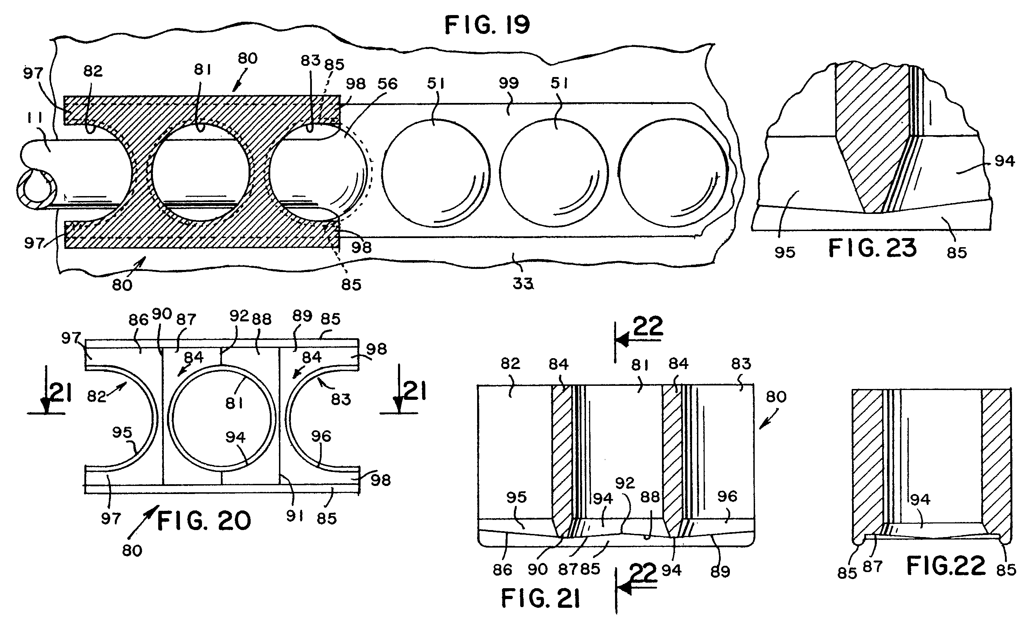

Referring now to Figs 19 - 26, there are shown two further modifications of the present invention for increasing the rate at which dough pieces can be formed.

Reciprocating cutter mechanisms are subject to significant impact loading each time the cutter die strikes the backing plate 15. These impact loadings produce vibrations in the reciprocating cutter mechanism which limit the speed at which it can be run efficiently. The cutter block units shown in Figs 19-26 form two dough pieces on each stroke and thereby double the production rate of the reciprocating cutter mechanism 14 without increasing its speed of operation.

Referring to Figs 19 to 23, there is shown a cutter block unit 80 formed with a central circular aperture 81 and semi circular concave surfaces 82, 83 facing upstream and downstream respectively. The aperture 81 and the concave surfaces 82,83 form cutter blades 84 therebetween which extend transversely of the extrudate rope 11. The block unit 80 is formed with edge blades 85 running parallel to the rope 11 on each side thereof. The bottom or land portion of the unit 80 is composed of four surfaces 86, 87, 88 and 89. Surfaces 86 and 87 meet along a transverse ridge line 90 and slant upwardly from the ridge line at a very shallow angle. The surfaces 88 and 89 meet along a transverse ridge line 91 and slant upwardly in a similar manner. The surfaces 87 and 88 intersect along a line 92. The aperture 81 and the concave surfaces 82, 83 are formed with inwardly tapered surfaces 94, 95 and 96 respectively.

The cutter block unit 80 is formed with extensions 97, 98 which extend past the semi circular surfaces 82, 84 to provide an overlapping cutting pattern.

When the cutter block unit 80 moves downwardly into the extrudate rope, the ridge lines 90, 91 first contact the rope. The sloped surfaces 86, 87 and 88, 89, and the tapered edges 94-96, first squeeze the core material out of the portions of the rope 11 that is beneath the surfaces 86-89, and then begin to squeeze the outer dough out of that area. Near the end of the downward stroke of the unit 80, the edge blades 85 engage the surface of the cotton belt and act as dams to prevent the dough still beneath the surfaces 86-89 from being spread transversely across the belt. At the end of the stroke, the blades sink into the cotton belt 33 permitting the surfaces 86-89 to impact against the belt. As a result only a very thin smear of dough 99 is not displaced into the dough pieces 51. These dough smears are pressed into the belt and are removed in the manner shown in Fig. 18.

In a preferred embodiment of this modification the edge blades 85 are about 1/16 inch (1.588mm) thick and extend 1/32 inch (0.794mm) below the ridge lines 90, 91. The ridge lines 90, 91 are 1/64 inch lower than the junction line 92. At the center of the unit 80, the surfaces 86-89 each have a width of 1/64 inch (0.397mm). The diameter of the aperture 81 and the semi circles 82, 84 is 1 1/4 inches (31.75mm). The surfaces 94-96 are tapered at 15 degrees.

On each stroke of the cutter block unit 80, the end of the extrudate rope is cut off and sealed at the concave surface 82. On the same stroke, a dough piece is formed at the concave surface 84 from the sealed end 56 of the rope 11 that was formed on the previous stroke at surface 82. On each stroke, a dough piece is formed at the central aperture 81 between the sealed end of the rope and the dough piece completed at the surface 83

Between downward strokes of the cutter unit 80, the conveyor belt 33 moves a distance equal to the spacing of two dough pieces 51. The overlap extensions 97 are provided to prevent the formation of laterally extending dough ridges formed by dough flowing outwardly along the edge of the cutter block during the forming of the sealed end 56.

The extension 97 effectively eliminates such ridges, however, should a ridge be formed, the extensions 98 will strike the ridge on the next stroke and squeeze the dough into the dough piece being formed at the surface 84.

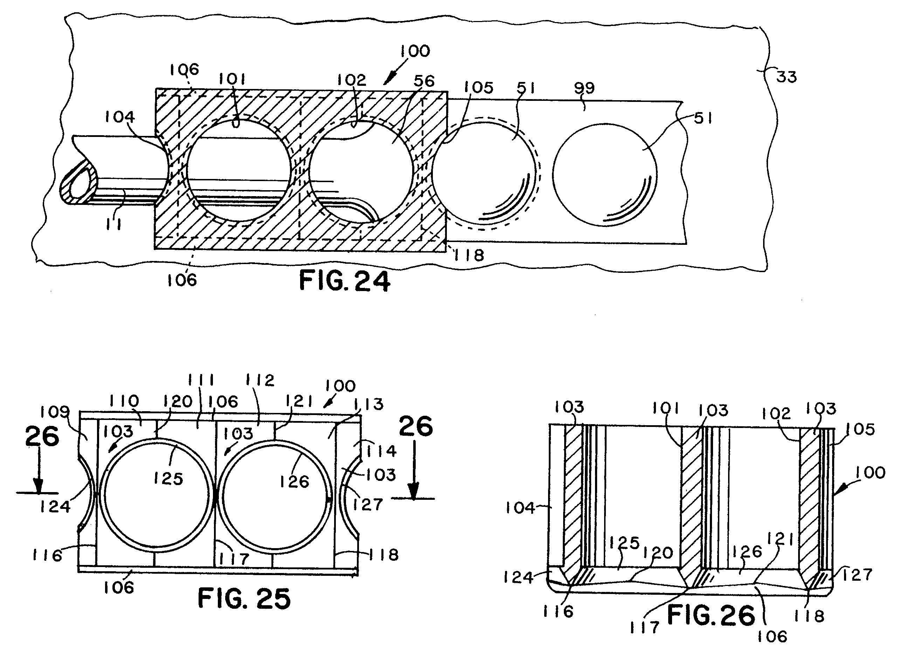

In Figs. 24-26, there is show a cutter block unit 100 formed with two circular apertures 101, 102 and with concave surfaces 104, 105 on the ends facing upstream and downstream respectively. The apertures 101, 102 and the concave surfaces 104, 105 form there between three cutter blades 103 therebetween which extend transversely of the extruder rope 11. The unit 100 is formed with edge blades 106 running parallel to the rope 11 on each side thereof. The bottom or land portion of the unit 100 is composed of six surfaces 109-114 and three ridge lines 116-118. The surfaces 109 and 110 slant upwardly from the ridge line 116, the surfaces 111 and 112 slant upwardly from the ridge line 117, and the surfaces 113 and 114 slope upwardly from the ridge line 118. The surfaces 110 and 111 intersect along a line 120, and the surfaces 112 and 113 intersect along a line 121. The apertures 101, 102 and the concave surfaces 104, 105 are formed with tapered surfaces 124-127 respectively.

On each downward stroke, complete dough pieces are formed at the aperture 101 and 102, and the end of the extrudate rope 11 is cut and sealed at the surface 104. The portion of the block from the ridge line 118 to the end containing the surface 105 provides an overlap section. Between downward strokes of the unit 100, the belt moves a distance equal to the spacing of two dough pieces 51. On each downward stroke, the sealed end 56 of the rope 11 is formed into a dough piece at the aperture 102. The operation of this cutter unit is essentially the same as that of the unit 80 except that the use of the double aperture produces more uniform dough pieces.

In a preferred embodiment of the cutter block unit 100, the edge blades 106 are about 1/16 inch (1.588mm) thick and extend 1/32 inch (0.794) below the ridge lines 116-118. The ridge lines 116-118 are 1/64 inch (0.397mm) lower than the junction lines 120, 121. At the center of the unit 100, the surfaces 109-114 each have a width of 1/64 inch (0.397mm). The radius of the apertures 101, 102 and of the surfaces 104, 105 is 5/8 inch (15.88mm). The surfaces 124-127 are tapered at 15 degrees.

The blades 37, 38 and the cutter block units 62, 80, 100 can be assembled from parts or formed as a unit.

In the dough pieces 51 formed by the preferred embodiments of the present invention, the inner material is totally enveloped by a continuous layer of the outer material which is of substantially uniform thickness throughout. In the baked goods formed by baking these dough pieces, as shown in Figs. 15 - 17, the core material is likewise totally covered by a continuous outer layer of substantially uniform thickness.

In the description and the Claims, the term "extrudate" refers to extruded material, and the term "rope" is intended to describe the continuous unified nature of the extrudate in the longitudinal direction, and not its cross sectional configuration. The term "dough" includes flour doughs and other materials resembling flour doughs.

The outer dough which forms the tube 25 and the enveloping layer of the dough pieces 51, is preferably a soft cookie dough such as that used in a wire cut or drop cookie, however, the invention contemplates the use of other doughs which are susceptible to extrusion with the type of equipment shown.

The inner or core material may be a dissimilar dough or any of a wide variety of other filling materials.

It will be seen from the foregoing that there has been described an improved method and apparatus for producing, in a fast and efficient manner, baked goods and dough pieces having a center of one material enveloped by an outer layer of another material by dividing continuously extruded concentric extrudate ropes being transported on horizontal conveyors.

## Claims

1. A method of making edible products having dissimilar inner and outer portions (24, 25) wherein the inner portion (24) is enveloped by the outer portion (25), comprising the steps of: continuously coextruding two dissimilar materials to form an extrudate rope (11) in which the dissimilar materials are arranged to provide an inner core surrounded by an outer tube, said outer tube consisting of a dough; depositing the extrudate rope (11) upon a continuously moving horizontal conveyor (12); pressing downwardly against the extrudate rope (11) to press it against the conveyor (12) along a zone which extends transversely of the extrudate rope (11), and during said pressing, pushing adjacent portions of the extrudate rope (11) away from the zone so as to displace the inner core material (24) away from the zone, and severing the extrudate rope (11) along a line within a part of said zone in which the outer tube (25) becomes sealed to itself, so as to form an individual dough piece (51) having an inner core (24) thereof enveloped by the outer tube (25); characterised by simultaneously pressing and severing said extrudate rope (11) at a plurality of said zones spaced therealong;

continuing said pressing until upper portions of the outer tube (25) have been forced through lower portions thereof to seal the outer tube to itself along said zones and until the extrudate rope (11) has been severed; and baking said dough pieces (51).

2. A method of forming dough pieces (51) having dissimilar inner and outer portions (24, 25) wherein the inner portion (24) is enveloped by the outer portion (25), comprising the steps of: continuously coextruding two dissimilar materials to form an extrudate rope (11) in which the dissimilar materials are arranged to provide an inner core surrounded by an outer tube, said outer tube consisting of a dough; depositing the extrudate rope (11) upon a continuously moving horizontal conveyor (12); pressing downwardly against the extrudate rope (11) to press it against the conveyor (12) along a zone which extends transversely of the extrudate rope (11), and during said pressing, pushing adjacent portions of the extrudate rope (11) away from the zone so as to displace the inner core material (24) away from the zone, and severing the extrudate rope (11) along a line within a part of said zone in which the outer tube (25) becomes sealed to itself, so as to form an individual dough piece (51) having an inner core (24) thereof enveloped by the outer tube (25); characterised by simultaneously pressing and severing said extrudate rope (11) at a plurality of said zones spaced therealong; continuing said pressing until upper portions of the outer tube (25) have been forced through lower portions thereof to seal the outer tube to itself along said zones and until the extrudate rope (11) has been severed.

3. The method of claim 1 or 2 wherein said dissimilar materials are dissimilar doughs.

4. The method of claim 1, 2 or 3 wherein said zones are curved to produce rounded ends on the dough pieces (51).

5. The method of claim 4 wherein said extrudate rope (11) is substantially circular in cross-section, the displacement of said inner core (24) away from said zones deforms the portion of extrudate rope between said zones to increase the width thereof, and the spacing of said zones along the axis of the extrudate rope is sufficiently greater than the diameter of the circular extrudate to produce a dough piece (51) that is substantially circular in plan view.

6. The method of any preceding claim wherein said step for dividing the extrudate rope (11) into individual dough pieces is accomplished by moving blade members (37, 38; 65; 84; 103) downwardly against the extrudate rope (11), said blade members (37, 38; 65; 84; 103) defining said zones and each having a blunt edge (55; 71, 72, 74; 86-89; 109-114) for deforming said extrudate rope (11) to displace said inner core material (24) and seal the outer tube (25) to itself.

7. The method of claim 6 wherein said blunt edges (55; 71, 72, 74; 86-89; 109-114) of said blade members (37, 38; 65; 84; 103) have a narrow flat land on the edge thereof outermost with respect to the dough piece (51) formed to separate the dough piece from the extrudate rope (11) along the sealed portion of the outer tube (25).

8. The method of claim 7 wherein said blade members (37, 38; 65; 84; 103) are curved in plan view to produce rounded ends on the dough pieces (51).

9. The method of any preceding claim wherein the inner core (24) is extruded through a round die (21) and the inner core material contains large particles of a firm nature.

10. The method of claim 9 wherein the inner core material is a dough containing chocolate chips.

11. The method of any one of claims 1-10 wherein the dough piece (51) has a core material (24) totally enveloped by a layer of dough (25) of substantially uniform thickness.

12. Apparatus for forming a dough piece (51) having dissimilar inner and outer portions wherein the inner portion (24) is enveloped by the outer portion (25), said apparatus comprising in combination means (26, 30) for continuously extruding two dissimilar materials to form an extrudate rope (11) of substantially circular cross-section, in which the dissimilar materials are arranged to provide an inner core (24) surrounded by an outer tube (25), said outer tube (25) consisting of a dough, conveyor means (12) for transporting the extrudate rope (11) in a horizontal orientation, and means for forming said dough pieces from said extrudate rope including a blade member (37, 38; 65; 84; 103), means (36) for moving said blade member (37, 38; 65; 84; 103) downwardly against the extrudate rope, said blade member (37, 38; 65; 84; 103) having a blunt edge (55; 71, 72, 74; 86-89; 109-114) for deforming said extrudate rope (11) to displace said inner core material (24) from the zone under said descending blade member (37, 38; 65; 84; 103), for sealing the outer tube (25) to itself, and for separating the dough piece (51) from the extrudate rope (11) along the sealed portion of the outer tube (25), characterized in that said blade member (37, 38; 65; 84; 103) includes two blades (37, 38; 66, 67; 86, 87; 88, 89; 101-105) curved in opposite directions in plan view, one of said blades (37; 66; 86; 104) operating to form a rounded end on the leading edge of the dough pieces and the other of said blades (38; 67; 89; 105) operating to form a rounded end on the trailing edge of the dough pieces (51), and in that the distance along the extrudate rope separating the points of operation of said two blades (37, 38; 66, 67; 86, 87; 88, 89; 101-105) with respect to a single dough piece (51) is greater than the diameter of the extrudate rope (11) by an amount substantially equal to the increase in width thereof caused by the deforming action of said blades (37, 38; 66; 67; 86, 87; 88, 89; 101-105) whereby the dough pieces (51) formed are substantially round in plan view.

13. Apparatus according to claim 12 wherein said blades (37, 38; 66, 67; 86, 87; 88, 89; 101-105) are mounted back to back and touching at the center to simultaneously form the rounded trailing edge of one dough piece (51) and the rounded leading edge of the following dough piece (51).

14. Apparatus according to claim 12 wherein said blade member (37, 38; 65; 84; 103) extends transversely with respect to said extrudate rope (11) and is formed with a first vertical concave surface facing upstream with respect to the extrudate rope (11), a second vertical concave surface facing downstream with respect to the extrudate rope (11), said blunt edge (55; 71, 72, 74; 86-89; 109-114) extending from said first vertical concave surface to said second vertical concave surface.

15. Apparatus according to claim 14 wherein said blunt edge (55; 71, 72, 74; 86-89; 109-114) includes tapered edge surfaces (54; 94, 95, 96; 124-127) connecting said vertical concave surfaces to the surface of a land (55; 71, 72; 86-89; 109-114).

16. Apparatus according to claim 15 wherein the width of said land (55; 71, 72; 86-89; 109-114) increases in proportion to the distance separating the two vertical concave surfaces.

17. Apparatus according to claim 15 or 16 including edge blades (64; 85; 106) positioned on opposite sides of said blade member and extending below said land (55; 71, 72; 86-89; 109-114) to stop the transverse flow of extrudate material beneath said land (55; 71, 72; 86-89; 109-114).

18. Apparatus according to claim 15, 16 or 17 wherein said land (55; 71, 72; 86-89; 109-114) is formed with a ridge line (74; 90; 116-118) extending transversely of said extrudate rope (11).

19. Apparatus according to claim 12 wherein said blunt edge (55; 71, 72, 74; 86-89; 109-114) includes a land (55; 71, 72; 86-89; 109-114) for separating the dough piece from the extrudate rope along the sealed portion of the outer shell (25).

20. Apparatus according to claim 12 or 19 wherein said means for forming dough pieces includes a plurality of blade members (37, 38; 65; 84; 103) spaced along the extrudate rope (11) to simultaneously form a plurality of dough pieces (51) from said rope (11).

21. Apparatus according to claim 20 wherein said means for forming said dough pieces includes a block (100) having curved openings (101, 102) extending vertically therethrough, said openings (101, 102) being spaced along the extrudate rope (11), said openings (101, 102) defining blade members (103) therebetween.

22. Apparatus according to claim 20 wherein said means for forming said dough pieces includes a block (80) having a central curved opening (81) and two end openings (82, 83), said central opening (81) having a concave surface facing downstream, one of said end openings (82) having only a concave surface facing upstream, and the other end opening (83) having only a concave surface facing downstream.

23. Apparatus according to claim 21 wherein said block (100) has two curved openings (101, 102) each having concave surfaces facing upstream and downstream.

24. Apparatus according to claim 23 wherein said block (100) has a concave surface (104) on an end thereof facing upstream.

25. Apparatus according to claim 24 wherein said block (100) has a concave surface (105) on an end thereof facing downstream.

## Revendications

1. Procédé pour fabriquer des produits alimentaires ayant des parties interne et externe (24, 25) de nature différente, dans lequel la partie interne (24) est enveloppée par la partie externe (25), comprenant les phases consistant à: co-extruder en continu deux matières différentes pour former un boudin d'extrusion (11) dans lequel les matières différentes sont disposées de manière à former un coeur interne entouré par un tube externe, ledit tube externe consistant en une pâte; déposer le boudin d'extrusion (11) sur un transporteur horizontal à déplacement continu (12); presser vers le bas contre le boudin d'extrusion (11) pour l'appuyer contre le transporteur (12) le long d'une zone qui s'étend transversalement au boudin d'extrusion (11), et, durant cette pression, pousser les parties adjacentes du boudin d'extrusion (11) loin de la zone afin de déplacer la matière du coeur interne (24) loin de ladite zone, et couper le boudin d'extrusion (11) le long d'une ligne au sein d'une partie de ladite zone dans laquelle le tube externe (25) se soude à lui-même, afin de former un morceau de pâte individuel (51) ayant son coeur interne (24) enveloppé par le tube externe (25); caractérisé par la pression et la découpe simultanées dudit boudin d'extrusion (11) à une pluralité desdites zones espacées tout du long; la poursuite de ladite pression jusqu'à ce que les parties supérieures du tube externe (25) soient forcées dans les parties inférieures de celui-ci afin de souder le tube externe à lui-même le long desdites zones et jusqu'à ce que le boudin d'extrusion (11) soit coupé; et la cuisson desdits morceaux de pâte (51).

2. Procédé pour fabriquer des morceaux de pâte (51) ayant des parties interne et externe (24, 25) de nature différente, dans lequel la partie interne (24) est enveloppée par la partie externe (25), comprenant les phases consistant à: co-extruder en continu deux matières différentes pour former un boudin d'extrusion (11) dans lequel les matières différentes sont disposées de manière à former un coeur interne entouré par un tube externe, ledit tube externe consistant en une pâte; déposer le boudin d'extrusion (11) sur un transporteur horizontal à déplacement continu (12); presser vers le bas contre le boudin d'extrusion (11) pour l'appuyer contre le transporteur (12) le long d'une zone qui s'étend transversalement au boudin d'extrusion (11), et, durant cette pression, pousser les parties adjacentes du boudin d'extrusion (11) loin de la zone afin de déplacer la matière du coeur interne (24) loin de ladite zone, et couper le boudin d'extrusion (11) le long d'une ligne au sein d'une partie de ladite zone dans laquelle le tube externe (25) se soude à lui-même, afin de former un morceau de pâte individuel (51) ayant son coeur interne (24) enveloppé par le tube externe (25); caractérisé par la pression et la découpe simultanées dudit boudin d'extrusion (11) à une pluralité desdites zones espacées tout du long; la poursuite de ladite pression jusqu'à ce que les parties supérieures du tube externe (25) soient forcées dans les parties inférieures de celui-ci afin de souder le tube externe à lui-même le long desdites zones et jusqu'à ce que le boudin d'extrusion (11) soit coupé.

3. Procédé selon la revendication 1 ou 2, dans lequel lesdites matières différentes sont des pâtes différentes.

4. Procédé selon la revendication 1, 2 ou 3, dans lequel lesdites zones sont courbes afin de former des extrémités arrondies sur les morceaux de pâte (51).

5. Procédé selon la revendication 4, dans lequel ledit boudin d'extrusion (11) est sensiblement circulaire en section transversale, le déplacement dudit coeur interne (24) loin desdites zones déforme la partie du boudin d'extrusion entre lesdites zones pour augmenter sa largeur, et l'espacement desdites zones le long de l'axe du boudin d'extrusion est suffisamment supérieur au diamètre du boudin d'extrusion circulaire pour former un morceau de pâte (51) qui soit sensiblement circulaire vu en plan.

6. Procédé selon l'une quelconque des revendications précédentes, dans lequel ladite phase de division du boudin d'extrusion (11) en morceaux de pâte individuels est réalisée en descendant des lames (37, 38; 65; 84; 103) contre le boudin d'extrusion (11), lesdites lames (37, 38; 65; 84; 103) définissant lesdites zones et chacune comportant un bord émoussé (55; 71, 72, 74; 86-89; 109-114) pour déformer ledit boudin d'extrusion (11) afin de déplacer ladite matière de coeur interne (24) et de souder le tube externe (25) à lui-même.

7. Procédé selon la revendication 6, dans lequel lesdits bords émoussés (55; 71, 72, 74; 86-89; 109-114) desdites lames (37, 38; 65; 84; 103) comportent une facette plate étroite sur leur arête la plus à l'extérieur relativement au morceau de pâte (51) formé afin de séparer le morceau de pâte du boudin d'extrusion (11) le long de la partie soudée du tube externe (25).

8. Procédé selon la revendication 7, dans lequel lesdites lames (37, 38; 65; 84; 103) sont courbes, vues en plan, afin de former des extrémités arrondies sur les morceaux de pâte (51).

9. Procédé selon l'une quelconque des revendications précédentes, dans lequel le coeur interne (24) est extrudé par une filière ronde (21) et la matière de coeur interne renferme de grosses particules de nature solide.

10. Procédé selon la revendication 9, dans lequel la matière de coeur interne est une pâte renfermant des copeaux de chocolat.

11. Procédé selon l'une quelconque des revendications 1 à 10, dans lequel le morceau de pâte (51) a une matière de coeur interne (24) complètement enveloppée par une couche de pâte (25) d'épaisseur sensiblement uniforme.

12. Appareil pour former un morceau de pâte (51) ayant des parties interne et externe de nature différente, dans lequel la partie interne (24) est enveloppée par la partie externe (25), ledit appareil comprenant conjointement des moyens (26, 30) pour extruder en continu deux matières de nature différente afin de former un boudin d'extrusion (11) de section transversale sensiblement circulaire, dans lequel les matières différentes sont agencées de manière à former un coeur interne (24) entouré par un tube externe (25), ledit tube externe (25) consistant en une pâte, un transporteur (12) pour acheminer le boudin d'extrusion (11) en une orientation horizontale, et des moyens pour former lesdits morceaux de pâte (51) à partir dudit boudin d'extrusion comprenant une lame (37, 38; 65; 84; 103), des moyens (36) pour descendre ladite lame (37, 38; 65; 84; 103) contre le boudin d'extrusion, ladite lame (37, 38; 65; 84; 103) comportant un bord émoussé (55; 71, 72, 74; 86-89; 109-114) pour déformer ledit boudin d'extrusion (11) afin de déplacer ledit coeur interne (24) de la zone sous ladite lame (37, 38; 65; 84; 103) descendant, pour souder le tube externe (25) à lui-même, et pour séparer le morceau de pâte (51) du boudin d'extrusion (11) le long de la partie soudée du tube externe (25), caractérisé en ce que ladite lame (37, 38; 65; 84; 103) comprend deux lames (37, 38; 66, 67; 86, 87; 88, 89; 101-105) courbées dans des directions opposées, vues en plan, l'une desdites lames (37; 66; 86; 104) servant à former une extrémité arrondie sur le bord antérieur des morceaux de pâte et l'autre lame (38; 67; 89; 105) servant à former une extrémité arrondie sur le bord postérieur des morceaux de pâte (51), et en ce que la distance le long du boudin d'extrusion séparant les points d'opération desdites deux lames (37, 38; 66, 67; 86, 87; 88, 89; 101-105) relativement à un morceau de pâte (51) est supérieure au diamètre du boudin d'extrusion (11) d'une quantité sensiblement égale à l'augmentation en largeur de celui-ci provoquée par l'action déformante desdites lames (37, 38; 66, 67; 86, 87; 88, 89; 101-105) de manière que les morceaux de pâte (51) formés soient sensiblement ronds, vus en plan.

13. Appareil selon la revendication 12, dans lequel lesdites lames (37, 38; 66, 67; 86, 87; 88, 89; 101-105) sont montées dos à dos et se touchant en leur centre pour former simultanément le bord postérieur arrondi d'un morceau de pâte (51) et le bord antérieur arrondi du morceau de pâte (51) suivant.

14. Appareil selon la revendication 12, dans lequel ladite lame (37, 38; 65; 84; 103) s'étend transversalement relativement audit boudin d'extrusion (11) et est formée d'une première surface concave verticale donnant vers l'amont relativement au boudin d'extrusion (11), d'une seconde surface concave verticale donnant vers l'aval relativement au boudin d'extrusion (11), ledit bord émoussé (55; 71, 72, 74; 86-89; 109-114) s'étendant de ladite première surface concave verticale à ladite seconde surface concave verticale.

15. Appareil selon la revendication 14, dans lequel ledit bord émoussé (55; 71, 72, 74; 86-89; 109-114) comprend des surfaces de bord effilées (54; 94, 95, 96; 124-127) reliant lesdites surfaces concaves verticales à la surface d'une facette (55; 71, 72; 86-89; 109-114).

16. Appareil selon la revendication 15, dans lequel la largeur de ladite facette (55; 71, 72, 74; 86-89; 109-114) augmente proportionnellement à la distance séparant les deux surfaces concaves verticales.

17. Appareil selon la revendication 15 ou 16 comprenant des lames à bords (64; 85; 106) positionnées sur les côtés opposés de ladite lame et s'étendant au-dessous de ladite facette (55; 71, 72, 74; 86-89; 109-114) pour stopper le flux transversal de matière d'extrusion sous ladite facette (55; 71, 72, 74; 86-89; 109-114).

18. Appareil selon la revendication 15, 16 ou 17, dans lequel ladite facette (55; 71, 72, 74; 86-89; 109-114) est formée avec une ligne de crête (74; 90; 116-118) s'étendant transversalement audit boudin d'extrusion (11).

19. Appareil selon la revendication 12, dans lequel ledit bord émoussé (55; 71, 72, 74; 86-89; 109-114) comprend une facette (55; 71, 72, 74; 86-89; 109-114) pour séparer le morceau de pâte du boudin d'extrusion le long de la partie soudée du tube externe (25).

20. Appareil selon la revendication 12 ou 19, dans lequel lesdits moyens pour former des morceaux de pâte comprennent une pluralité de lames (37, 38; 65; 84; 103) espacées le long du boudin d'extrusion (11) pour former simultanément une pluralité de morceaux de pâte (51) à partir dudit boudin (11).

21. Appareil selon la revendication 20, dans lequel lesdits moyens pour former lesdits morceaux de pâte comprennent un bloc (100) comportant des ouvertures circulaires (101, 102) s'étendant verticalement au travers, lesdites ouvertures (101, 102) étant espacées le long du boudin d'extrusion (11), lesdites ouvertures (101, 102) formant des lames (103) entre elles.

22. Appareil selon la revendication 20, dans lequel lesdits moyens pour former lesdits morceaux de pâte comprennent un bloc (80) comportant une ouverture circulaire central (81) et deux ouvertures d'extrémité (82, 83), ladite ouverture centrale (81) comportant une surface concave donnant vers l'aval, une desdites ouvertures d'extrémité (82) ne comportant qu'une seule surface concave donnant vers l'amont, et l'autre ouverture d'extrémité (83) ne comportant qu'une seule surface concave donnant vers l'aval.

23. Appareil selon la revendication 21, dans lequel ledit bloc (100) comporte deux ouvertures circulaires (101, 102), comportant chacune des surfaces concaves donnant vers l'amont et vers l'aval.

24. Appareil selon la revendication 23, dans lequel ledit bloc (100) comporte une surface concave (104) sur une de ses extrémités, donnant vers l'amont.

25. Appareil selon la revendication 24, dans lequel ledit bloc (100) comporte une surface concave (105) sur une de ses extrémités, donnant vers l'aval.

**Patentansprüche**

1. Verfahren zum Herstellen eßbarer Produkte, die unterschiedliche innere und äußere Teile (24,25) haben, wobei der innere Teil (24) von dem äußeren Teil (25) umhüllt wird, mit den folgenden Schritten: kontinuierliches gemeinsames Herauspressen (Extrudieren) der beiden unterschiedlichen Materialien, um einen herausgedrückten Strang (11) zu bilden, in welchem die beiden unterschiedlichen Materialien so angeordnet sind, daß sie einen inneren Kern bereitstellen, der von einem äußeren Schlauch umgeben ist, wobei der äußere Schlauch aus einem Teig besteht, Anordnen des extrudierten Stranges (11) auf einer sich kontinuierlich horizontal bewegenden Transportbahn (12), Herabdrücken gegen den extrudierten Strang (11), um ihn gegen die Transportbahn (12) entlang einer Zone zu drücken, die sich quer zu dem extrudierten Strang (11) erstreckt, und Wegschieben der angrenzenden Teile des extrudierten Stranges (11) von dieser Zone während des Pressens, um so das innere Kernmaterial (24) von dieser Zone weg zu verschieben, und Abtrennen des extrudierten Stranges (11) entlang einer Linie innerhalb eines Teils der Zone, in welcher der äußere Schlauch (25) mit sich selbst dicht geschlossen wird, um so ein einzelnes Teigstück (51) zu bilden, das einen inneren Kern (24) hat, welcher von dem äußeren Schlauch (25) umhüllt ist, gekennzeichnet durch gleichzeitiges Drücken und Abtrennen des extrudierten Stranges (11) an einer Mehrzahl von Zonen, die entlang desselben beabstandet sind, Fortsetzen des Pressens, bis die oberen Teile des äußeren Schlauches (25) bis hin zu den unteren Teilen desselben herabgedrückt sind, um den äußeren Schlauch mit sich selbst entlang der Zonen dicht zu schließen und bis der extrudiert Strang (11) abgetrennt ist, und Backen der Teigstücke (51).

2. Verfahren zum Formen von Teigstücken (51), welche unterschiedliche innere und äußere Teile (24,25) haben, wobei der innere Teil (24) von dem äußeren Teil (25) umhüllt wird, mit den folgenden Schritten: gemeinsames, kontinuierliches Auspressen der beiden unterschiedlichen Materialien, um einen extrudierten Strang (11) zu bilden, in welchem die unterschiedlichen Materialien so angeordnet sind, daß sie einen inneren Kern bereitstellen, der von einem äußeren Schlauch umgeben ist, wobei der äußere Schlauch aus einem Teig besteht, Anordnen des extrudierten Stranges (11) auf einer sich kontinuierlich bewegenden horizontalen Transportbahn (12), Nachuntendrük-

ken gegen den extrudierten Strang (11), um ihn gegen die Transportbann (12) entlang einer Zone zu pressen, die sich quer zu dem extrudierten Strang (11) erstreckt, und Wegdrücken benachbarter Abschnitte des extrudierten Stranges (11) während des Pressens weg von der Zone, um so das innere Kernmaterial (24) von dieser Zone weg zu verschieben, und Abtrennen des extrudierten Stranges (11) entlang einer Linie innerhalb eines Teils der Zone, in welcher der äußere Schlauch (25) mit sich selbst dicht geschlossen wird, um ein einzelnes Teigstück (51) zu bilden, das einen inneren Kern hat, welcher von dem äußeren Schlauch (25) eingehüllt wird, gekennzeichnet durch gleichzeitiges Pressen und Abtrennen des extrudierten Stranges an einer Mehrzahl der Zonen, die daran entlang beabstandet sind, Fortsetzen des Pressens, bis die oberen Abschnitte des äußeren Schlauches (25) nach unten hindurch bis zu den unteren Abschnitten desselben gedrückt sind, um den äußeren Schlauch mit sich selbst entlang der Zonen dicht zu schließen und bis der extrudierte Strang (11) abgetrennt ist.

3. Verfahren nach Anspruch 1 oder 2, wobei die unterschiedlichen Materialien unterschiedliche Teige sind.

4. Verfahren nach Anspruch 1, 2 oder 3, wobei die Zonen gekrümmt sind, um an den Teigstücken (51) abgerundete Enden zu erzeugen.

5. Verfahren nach Anspruch 4, wobei der extrudierte Strang (11) im Querschnitt im wesentlichen kreisförmig ist, wobei die Verschiebung des inneren Kerns weg von den Zonen den Abschnitt des extrudierten Stranges zwischen den Zonen verformt, so daß seine Breite zunimmt, und wobei der Abstand der Zonen entlang der Achse des extrudierten Stranges in ausreichendem Maße größer als der Durchmesser des kreisförmig extrudierten Materials ist, um ein Teigstück (51) zu erzeugen, das in einer Draufsicht im wesentlichen kreisförmig ist.

6. Verfahren nach einem der vorstehenden Ansprüche, wobei der Schritt zum Aufteilen des extrudierten Stranges (11) in einzelne Teigstücke bewirkt wird durch Bewegen von Messerteilen (37, 38; 65; 84; 103) nach unten gegen den extrudierten Strang (11), wobei die Messerteile (37, 38; 65; 84; 103) die erwähnten Zonen definieren und jeweils eine stumpfe Kante (55; 71, 72, 74; 86-89; 109-114) haben, um den extrudierten Strang (11) so zu verformen, daß das innere Kernmaterial (24) verschoben und der äußere Schlauch mit sich selbst dicht geschlossen wird.

7. Verfahren nach Anspruch 6, wobei die stumpfen Kanten (55, 71, 72, 74; 86-89; 109-114) der Messerteile (37, 38; 65; 84; 103) einen schmalen flachen Schneidrücken an ihrer Kante haben, die bezüglich des geformten Teigstückes (51) am weitesten außen liegt, um das Teigstück von dem extrudierten Strang (11) entlang des dicht geschlossenen Abschnittes des äußeren Schlauches (25) abzutrennen.

8. Verfahren nach Anspruch 7, wobei die Messerteile (37, 38; 65; 84; 103) in der Draufsicht gekrümmt sind, um an den Teigstücken (51) abgerundete Enden zu erzeugen.

9. Verfahren nach einem der vorstehenden Ansprüche, wobei der innere Kern (24) durch einen runden Preßring (21) ausgepreßt wird und daß das innere Kernmaterial größere Teile mit einer festen Konsistenz enthält.

10. Verfahren nach Anspruch 9, wobei das innere Kernmaterial ein Teig ist, der Schokoladenstücke enthält.

11. Verfahren nach einem der Ansprüche 1 bis 10, wobei das Teigstück (51) ein Kernmaterial (24) hat, das vollständig von einer Teigschicht (25) von im wesentlichen gleichmäßiger Dicke umhüllt ist.

12. Vorrichtung zum Formen eines Teigstückes (51), das unterschiedliche innere und äußere Teile hat, wobei der innere Teil (24) von dem äußeren Teil (25) eingehüllt wird, wobei die Vorrichtung in Kombination aufweist: Einrichtungen (26,30) zum kontinuierlichen Herauspressen zweier verschiedener Materialien, um einen extrudierten Strang (11) mit im wesentlichen kreisförmigem Querschnitt zu bilden, in welchem die verschiedenen Materialien so angeordnet sind, daß sie einen inneren Kern (24) bereitstellen, der von einem äußeren Schlauch (25) umgeben ist, wobei der äußere Schlauch (25) aus einem Teig besteht, Transporteinrichtungen (12) zum Transportieren des extrudierten Stranges (11) in horizontaler Ausrichtung, und Einrichtungen zum Formen der Teigstücke aus dem extrudierten Strang einschließlich eines Messerteiles (37, 38; 65; 84; 103), Einrichtungen (36) zum Bewegen des Messerteiles (37,38; 65; 84; 103) nach unten gegen den extrudierten Strang, wobei das Messerteil (37, 38; 65; 84; 103) eine stumpfe Kante (55; 71, 72, 74; 86-89; 109-114) zum Verformen des extrudierten Stranges (11) hat, um das innere Kernmaterial (24) von der Zone unter dem sich herabsenkenden Messerteil (37, 38; 65; 84; 103) hat, um den äußeren Schlauch (25) mit sich selbst dicht zu schließen, und zum Abtrennen des Teigstückes (51) von dem extrudierten Strang (11) entlang des abgedichteten Bereiches des äußeren Schlauches, dadurch gekennzeichnet, daß das Messerteil (37, 38; 65; 84; 103) zwei Messer (37, 38; 66, 67; 86, 87; 88, 89; 101-105) aufweist, die in der Draufsicht in entgegengesetzten Richtungen gekrümmt sind, wobei eines der Messer 37; 66; 86; 104) so arbeitet, daß es ein abgerundetes Ende an dem vorderen Rand des Teigstückes bildet und das andere der Messer (38; 67; 89; 105) so arbeitet, daß es ein abgerundetes Ende an dem hinteren Rand des Teigstückes (51) bildet, und daß der Abstand entlang des extrudierten Stranges, welcher die Arbeitspunkte der beiden Messer (37, 38; 66, 67; 86, 87; 88, 89; 101-105) bezüglich eines einzelnen Teigstückes (51) voneinander trennt, größer ist als der Durchmesser des extrudierten Stranges (11) und zwar um einen Betrag, der im wesentlichen gleich der Breitenzunahme desselben ist, welche durch die Verformungswirkung der beiden Messer (37, 38; 66, 67; 86, 87; 88, 89; 101-105) bewirkt wird, wodurch die gebildeten Teigstücke (51) in der Draufsicht im wesentlichen rund sind.

13. Vorrichtung nach Anspruch 12, wobei die Messer (37, 38; 66, 67; 86, 87; 88, 89; 101-105) Rücken an Rücken montiert sind und sich in der Mitte berühren, um gleichzeitig das abgerundete hintere Ende eines Teigstückes (51) und das abgerundete vordere Ende des folgenden Teigstückes (51) zu bilden.

14. Vorrichtung nach Anspruch 12, wobei das Messerteil (37, 38; 65; 84; 103) sich bezüglich des extrudierten Stranges (11) in Querrichtung erstreckt und mit einer ersten vertikalen, konkaven Fläche ausgebildet ist, welche bezüglich des extrudierten Stranges (11) stromaufwärts ausgerichtet ist, wobei eine zweite vertikale, konkave Fläche bezüglich des extrudierten Stranges (11) stromabwärts ausgerichtet ist und wobei die stumpfe Kante (55; 71, 72, 74; 86-89; 109-114) sich von der ersten vertikalen, konkaven Oberfläche zu der zweiten vertikalen, konkaven Oberfläche erstreckt.

15. Vorrichtung nach Anspruch 14, wobei die stumpfe Kante (55; 71, 72, 74; 86-89; 109-114) schräg zulaufende Randflächen (54; 94, 95, 96; 124-127) hat, welche die vertikalen, konkaven Oberflächen mit der Oberfläche eines Schneidrückens (55; 71, 72; 86-89; 109-114) verbindet.

16. Vorrichtung nach Anspruch 15, wobei die Breite des Schneidrückens (55; 71, 72; 86-89; 109-114) proportional zu dem Abstand zunimmt, welcher die beiden vertikalen, konkaven Oberflächen trennt.

17. Vorrichtung nach Anspruch 15 oder 16 einschließlich von Kantenmessern (64; 85; 106), die an gegenüberliegenden Seiten des Messerteiles angeordnet sind und sich unterhalb des Schneidrückens (55; 71, 72; 86-89; 109-114) erstrecken, um das Fließen des extrudierten Materials in Querrichtung unterhalb des Schneidrückens (55; 71, 72; 86-89; 109-114) zu stoppen.

18. Vorrichtung nach Anspruch 15, 16 oder 17, wobei der Schneidrücken (55; 71, 72; 86-89; 109-114) mit einer Steglinie (74; 90; 116-118) gebildet ist, welche sich quer zu dem extrudierten Strang (11) erstreckt.

19. Vorrichtung nach Anspruch 12, wobei die stumpfe Kante (55; 71, 72, 74; 86-89; 109-114) einen Schneidrücken (55; 71, 72; 86-89; 109-114) aufweist, um das Teigstück von dem extrudierten Strang entlang des dicht geschlossenen Abschnittes der äußeren Hülle (25) abzutrennen.

20. Vorrichtung nach Anspruch 12 oder 19, wobei die Einrichtung zum Formen von Teigstücken eine Mehrzahl von Messerteilen (37, 38; 65; 84; 103) aufweist, die entlang des extrudierten Stranges (11) beabstandet sind, um gleichzeitig eine Mehrzahl von Teigstücken (51) aus dem Strang (11) zu bilden.

21. Vorrichtung nach Anspruch 20, wobei die Einrichtung zum Formen der Teigstücke einen Block (100) aufweist, der gekrümmte Öffnungen (101, 102) hat, die sich in vertikaler Richtung dahindurch erstrecken, wobei die Öffnungen (101, 102) entlang des extrudierten Stranges (11) beabstandet sind und wobei die Öffnungen (101, 102) dazwischen die Messerteile (103) definieren.

22. Vorrichtung nach Anspruch 20, wobei die Einrichtung zum Formen der Teigstücke einen Block (80) aufweist, der eine zentrale gekrümmte Öffnung (81) und zwei Endöffnungen (82, 83) hat, wobei die zentrale Öffnung (81) eine konkave Oberfläche hat, die stromabwärts gerichtet ist, eine der Endöffnungen (82) nur eine konkave Fläche hat, die stromaufwärts gerichtet ist und die andere Endöffnung (83) nur eine konkave Oberfläche hat, die stromabwärts gerichtet ist.

23. Vorrichtung nach Anspruch 21, wobei der Block (100) zwei gekrümmte Öffnungen (101, 102) hat, die jeweils konkave Oberflächen haben, welche stromaufwärts und stromabwärts gerichtet sind.

24. Vorrichtung nach Anspruch 23, wobei der Block (100) eine konkave Oberfläche (104) an einem Ende hat, welche stromaufwärts gerichtet ist.

25. Vorrichtung nach Anspruch 24, wobei der Block (100) eine konkave Oberfläche (105) an dem anderen Ende hat, welche stromabwärts gerichtet ist.

FIG. 1

FIG.15

FIG.16

FIG.17

EP 0 130 772 B1

FIG. 2

FIG. 3

FIG. 4

FIG. 5

FIG. 6

FIG. 7

FIG. 8

FIG. 9

FIG. 10

FIG. II

FIG. 12

FIG. 13

FIG. 14

FIG. 18

EP 0 130 772 B1

FIG.19

FIG.20

FIG.21

FIG.22

FIG.23